# EUROPÄISCHE PATENTSCHRIFT

(11) **EP 3 716 527 B1**
(45) Veröffentlichungstag und Bekanntmachung des Hinweises auf die Patenterteilung: **24.09.2025**
(21) Anmeldenummer: 20165188.2
(22) Anmeldetag: 24.03.2020
(51) Int. Cl.: H04L 12/12

(54) **ELEKTRONIKGERÄT UND KOMMUNIKATIONSEINHEIT**
ELECTRONIC DEVICE AND COMMUNICATION UNIT
APPAREIL ÉLECTRONIQUE ET UNITÉ DE COMMUNICATION

(30) Priorität: 27.03.2019 DE 202019101746 U
(43) Veröffentlichungstag der Anmeldung: 30.09.2020
(73) Patentinhaber: Wago Verwaltungsgesellschaft mbH, 32423 Minden (DE)
(72) Erfinder: NEUGEBAUER, Philipp, 31675 Bückeburg (DE); WAGNER, Stefan, 32479 Hille (DE)
(74) Vertreter: Kröncke, Rolf

(56) Entgegenhaltungen:
- US-A1- 2011 167 179
- US-A1- 2014 098 842
- US-A1- 2015 273 610

## Beschreibung

Die Erfindung betrifft ein Elektronikgerät in Form eines elektrischen Energieversorgungsgeräts für die elektrische Energieversorgung elektrischer Komponenten aus einer Energiequelle. Die Erfindung betrifft insbesondere das Gebiet der Elektronikgeräte für industrielle Anlagen, insbesondere für industrielle Steuerungen wie z. B. speicherprogrammierbare Steuerungsanlagen.

Ein Energieversorgungsgerät dient zur Bereitstellung elektrischer Energie auf einem bestimmten Spannungsniveau, z. B. 12 Volt oder 24 Volt, und einer bestimmten Spannungsart, z. B. Gleichspannung, wobei das Energieversorgungsgerät diese elektrische Energieversorgung z.B. aus einem Stromversorgungsnetz, z. B. einem Wechselspannungsnetz, bereitstellt. Hierfür weist das Elektronikgerät entsprechende Komponenten zur Umwandlung und/oder Gleichrichtung der vom Stromversorgungsnetz bereitgestellten elektrischen Energie auf, z. B. in Form einer getakteten Umsetzungsschaltung, wenn es sich um ein Schaltnetzgerät handelt, und/oder wenigstens einen Transformator.

Im Bereich der industriellen Stromversorgung gelten hohe Anforderungen an die Zuverlässigkeit und Funktionalität solcher Elektronikgeräte.

Aus der US 2015/0273610 A1 sind Systeme und Verfahren zum Koppeln drahtloser Steuerungsgeräte mit einem Schweißtransformator bekannt.

Der Erfindung liegt die Aufgabe zugrunde, ein weiter verbessertes Elektronikgerät bereitzustellen.

Diese Aufgabe wird durch ein elektrisches Energieversorgungsgerät gemäß Anspruch 1 gelöst.

Zur Lösung dieser Aufgabe kann das Elektronikgerät eine Steuerelektronik aufweisen, die wenigstens einen Programmspeicher mit einem darin gespeicherten Computerprogramm und einen Rechner zur Ausführung des Computerprogramms aufweist. Das Computerprogramm weist Software-Steuerfunktionen zur Steuerung von Funktionen, z.B. von Stromversorgungs-Funktionen, des Elektronikgeräts auf. Auf diese Weise kann das Elektronikgerät mit einer Vielzahl von Funktionen realisiert werden, die jeweils softwaremäßig implementiert werden können. Das Elektronikgerät ist dadurch auch Update-fähig, d. h. es kann ein weiterentwickeltes Computerprogramm ohne Änderungen der Hardware eingespeichert werden.

Das Elektronikgerät kann einen Parameterspeicher aufweisen, in dem Parameter zur Definition der Funktionalität des Elektronikgeräts speicherbar sind. Durch solche Parameter können bestimmte Details der Funktionen des Elektronikgeräts vom Anwender nach Bedarf eingestellt und an eine jeweilige Anwendung angepasst werden.

In einer vorteilhaften Ausgestaltung weist das Elektronikgerät wenigstens eine mit der Steuerelektronik gekoppelte Kommunikationseinheit auf, durch die das Elektronikgerät zur Datenkommunikation mit einem externen Computergerät eingerichtet ist. Auf diese Weise ist ein Datenaustausch zwischen dem externen Computergerät und dem Elektronikgerät möglich, z. B. um Betriebsdaten des Elektronikgeräts auszulesen oder bestimmte Funktionen des Elektronikgeräts durch das externe Computergerät einzustellen und/oder zu steuern. Zudem ist die Einspeicherung von variablen Parametern in dem Elektronikgerät möglich, wenn dieses einen Parameterspeicher aufweist.

Das externe Computergerät kann ein beliebiger Rechner sein, wie z. B. ein Laptop oder ein PC. Das externe Computergerät kann auch ein Steuergerät einer speicherprogrammierbaren Steuerungsanlage oder ein sonstiges Gerät einer solchen speicherprogrammierbaren Steuerungsanlage sein. Das externe Computergerät kann ein an einen Datenbus angeschlossenes Gerät sein. Hierzu kann das Elektronikgerät über die Kommunikationseinheit mit dem Datenbus gekoppelt sein.

Gemäß einer vorteilhaften Ausgestaltung der Erfindung ist vorgesehen, dass die Kommunikationseinheit als wechselbares Kommunikationsmodul ausgebildet ist, wobei das Kommunikationsmodul eine Gateway-Funktionalität aufweist, durch die eine bidirektionale Konvertierung zwischen einem von dem externen Computergerät genutzten externen Kommunikationsprotokoll und/oder Physical-Layer und einem zwischen dem Kommunikationsmodul und dem Rechner genutzten internen Kommunikationsprotokoll und/oder Physical-Layer erfolgt, wobei das Kommunikationsmodul entweder genau ein externes Kommunikationsprotokoll oder mehrere externe Kommunikationsprotokolle unterstützt. Zum Rechner des Elektronikgeräts hin arbeitet das Kommunikationsmodul somit mit dem internen Kommunikationsprotokoll und/oder Physical-Layer und zu dem externen Computergerät hin mit dem externen Kommunikationsprotokoll und/oder Physical-Layer. Durch die Gateway-Funktionalität kann das Kommunikationsmodul sowohl eine Umsetzung von dem externen Kommunikationsprotokoll in das interne Kommunikationsprotokoll als auch umgekehrt von dem internen Kommunikationsprotokoll in das externe Kommunikationsprotokoll durchführen. Gleiches gilt für die Umsetzung zwischen dem internen Physical-Layer und dem externen Physical-Layer. Als Physical-Layer wird dabei die Bitübertragungsschicht im OSI-Schichtenmodell verstanden.

Dies hat den Vorteil, dass das Kommunikationsmodul und damit dessen Gateway-Funktionalität und insbesondere das unterstützte externe Kommunikationsprotokoll und/oder Physical-Layer auf einfache Weise ausgetauscht werden kann, indem ein Kommunikationsmodul vom Elektronikgerät entfernt wird und ein anderes Kommunikationsmodul mit dem Elektronikgerät verbunden wird. Auf diese Weise kann das Elektronikgerät ohne großen Aufwand an unterschiedliche externe Kommunikationsprotokolle und/oder Physical-Layer angepasst werden. Das interne Kommunikationsprotokoll kann z.B. ein beliebiges Feldbus-Kommunikationsprotokoll sein, z. B. Modbus-RTU.

Ein weiterer Vorteil eines solchen modularen Kommunikationskonzepts besteht darin, dass ein und dasselbe Kommunikationsmodul zunächst für ein bestimmtes Elektronikgerät und zu einem späteren Zeitpunkt für ein anderes Elektronikgerät oder ein sonstiges Gerät genutzt werden kann. Die mit der Kommunikationsschnittstelle verbundenen Kosten sind dementsprechend nicht dem Elektronikgerät oder sonstigen Gerät zugeordnet, sondern dem Kommunikationsmodul.

Gemäß einer vorteilhaften Ausgestaltung der Erfindung ist vorgesehen, dass das externe Kommunikationsprotokoll ein Busprotokoll oder ein P2P-Protokoll ist, das die Datenkommunikation mehrerer an einem gemeinsamen Datenbus angeschlossener externer Computergeräte unterstützt. Dies hat den Vorteil, dass das Elektronikgerät durch das Kommunikationsmodul busfähig gemacht werden kann. Das externe Kommunikationsprotokoll kann z.B. ein beliebiges Feldbus-Kommunikationsprotokoll sein, z. B. IO-Link, Ethernet/IP, EtherCAT, Interbus, SafetyBusP, Profibus, Sercos, Modbus-RTU und ähnliche.

Das Kommunikationsmodul kann dazu eingerichtet sein, zyklische Kommunikationen und/oder azyklische Kommunikationen mit dem Rechner des Elektronikgeräts durchzuführen.

Gemäß einer vorteilhaften Ausgestaltung der Erfindung ist vorgesehen, dass das Kommunikationsmodul dazu eingerichtet ist, über das interne Kommunikationsprotokoll aus der Steuerelektronik des Elektronikgeräts eine Kennung, die die Geräteart des Elektronikgeräts angibt, auszulesen und über das externe Kommunikationsprotokoll an das externe Computergerät zu übertragen. Dies hat den Vorteil, dass das Elektronikgerät insbesondere in einer Datenübertragungs-Umgebung mit mehreren Kommunikationsteilnehmern, z. B. bei Verbindung des Kommunikationsmoduls mit einem Datenbus, sich immer als ein solches Elektronikgerät zu erkennen geben kann, unabhängig von dem verwendeten internen und externen Kommunikationsprotokoll. Das Elektronikgerät kann auf diese Weise unabhängig vom jeweils angesteckten Kommunikationsmodul als ein solches Elektronikgerät von anderen Datenübertragungsteilnehmern identifiziert werden.

Gemäß einer vorteilhaften Ausgestaltung der Erfindung ist vorgesehen, dass das Kommunikationsmodul dazu eingerichtet ist, ein über das externe Kommunikationsprotokoll vom externen Computergerät empfangenes Kommando zur Blockparametrierung der Steuerelektronik in das interne Kommunikationsprotokoll zu konvertieren, sodass die Steuerelektronik, insbesondere deren Parameterspeicher, mittels des Kommandos zur Blockparametrierung durch eine Vielzahl von Parametern beschreibbar ist. Auf diese Weise ist der neue Parametersatz gesammelt aktivierbar. Dies hat den Vorteil, dass das Elektronikgerät auch bei Verwendung eines internen Kommunikationsprotokolls, das an sich kein gleichwirkendes Kommando zur Blockparametrierung kennt, mittels des über das externe Kommunikationsprotokoll empfangenen Kommandos mit einer solchen Blockparametrierung in einem "Block" parametriert werden kann, d. h. eine Vielzahl von Parametern kann mit einem Kommando schnell und einfach übertragen und in das Elektronikgerät gespeichert werden.

Gemäß einer vorteilhaften Ausgestaltung der Erfindung ist vorgesehen, dass das Kommunikationsmodul dazu eingerichtet ist, ein über das externe Kommunikationsprotokoll vom externen Computergerät empfangenes Data-Storage-Kommando gegebenenfalls mehrschrittig in ausgewählte Funktionen des internen Kommunikationsprotokolls umzusetzen, wobei Parameterdaten der Steuerelektronik durch das Kommunikationsmodul ausgelesen und an das externe Computergerät übertragen werden und/oder Parameterdaten von dem externen Computergerät über das Kommunikationsmodul in die Steuerelektronik geschrieben werden. Auf diese Weise kann das Elektronikgerät auch für ein extern empfangenes Data-Storage-Kommando tauglich gemacht werden, selbst wenn das interne Kommunikationsprotokoll ein solches gleichwirkendes Kommando nicht kennt. Durch das Kommunikationsmodul wird das empfangene Data-Storage-Kommando dann in vorhandene, ausgewählte Funktionen des internen Kommunikationsprotokolls umgesetzt, was gegebenenfalls mehrschrittig erfolgen kann, d. h. durch mehrere schrittweise nacheinander durchgeführte Funktionen des internen Kommunikationsprotokolls. Durch das Data-Storage-Kommando kann ein aktueller Parametersatz der Steuerelektronik des Elektronikgeräts ausgelesen und an das externe Computergerät übertragen werden, wo der Parametersatz dann gespeichert werden kann. Es kann dann eine Neuparametrierung des Elektronikgeräts erfolgen, z. B. indem ein neuer Parametersatz mittels eines Kommandos zur Blockparametrierung an die Steuerelektronik übertragen wird. Durch das Data-Storage-Kommando kann insbesondere eine Backup-Funktionalität eines Parametersatzes des Elektronikgeräts über das Kommunikationsmodul realisiert werden.

Gemäß einer vorteilhaften Ausgestaltung der Erfindung ist vorgesehen, dass das Kommunikationsmodul einen Passwort-Schutz aufweist oder zulässt, sodass ein über das Kommunikationsmodul mit dem Elektronikgerät kommunizierendes externes Computergerät zumindest bei Zugriff auf bestimmte Funktionen der Steuerelektronik eine Passwort-Authentifizierung durchführen muss. Auf diese Weise ist eine erhöhte Sicherheit gegenüber Fehlbedienungen und insbesondere gegen Manipulation des Elektronikgeräts gegeben. Diese erhöhte Sicherheit wird durch einen Passwort-Schutz im Kommunikationsmodul realisiert, durch den ein beliebiger, unauthentifizierter Zugriff zumindest auf bestimmte Funktionen der Steuerelektronik unterbunden ist. Das externe Computergerät muss zunächst eine Passwort-Authentifizierung durchführen, d. h. ein korrektes Passwort an das Kommunikationsmodul übertragen, bevor das Kommunikationsmodul den Zugriff auf bestimmte Funktionen der Steuerelektronik freigibt.
1. Elektronikgerät nach einem der vorhergehenden Ansprüche, dadurch gekennzeichnet, dass das Elektronikgerät (1) als elektrisches Energieversorgungsgerät für die elektrische Energieversorgung elektrischer Komponenten aus einer Energiequelle und/oder als elektronischer Schutzschalter ausgebildet ist.
2. Elektronikgerät nach Anspruch 6, dadurch gekennzeichnet, dass das elektrische Energieversorgungsgerät als Netzgerät, z.B. als Netzgerät einer industriellen Steuerung, insbesondere einer speicherprogrammierbaren Steuerungsanlage, als Schaltnetzgerät und/oder als unterbrechungsfreie Stromversorgung (USV) ausgebildet ist.

Gemäß einer vorteilhaften Ausgestaltung der Erfindung ist vorgesehen, dass Elektronikgerät als elektrisches Energieversorgungsgerät für die elektrische Energieversorgung elektrischer Komponenten aus einer Energiequelle und/oder als elektronischer Schutzschalter ausgebildet ist. Das elektrische Energieversorgungsgerät kann als Netzgerät ausgebildet sein, z.B. als Netzgerät einer industriellen Steuerung, insbesondere einer speicherprogrammierbaren Steuerungsanlage, als Schaltnetzgerät und/oder als unterbrechungsfreie Stromversorgung (USV). Dies hat den Vorteil, dass das Elektronikgerät in unterschiedlichsten Varianten realisiert werden kann. Hierbei kann jeweils das gleiche modulare Kommunikationskonzept mit den wechselbaren Kommunikationsmodulen eingesetzt werden. Mit anderen Worten, die Kommunikationsmodule können unabhängig von der Art der Implementierung des Elektronikgeräts eingesetzt werden. Die aus der Steuerelektronik des Elektronikgeräts auslesbare Kennung, die die Geräteart des Elektronikgeräts angibt, kann diesbezüglich beispielsweise eine Unterscheidung zwischen einem Elektronikgerät einer industriellen Steuerung, einem Schaltnetzgerät und/oder einer unterbrechungsfreien Stromversorgung aufweisen.

Gemäß einer vorteilhaften Ausgestaltung der Erfindung ist vorgesehen, dass das Kommunikationsmodul von außen an ein Gehäuse des Elektronikgeräts mittels einer elektrischen Steckverbindung ansteckbar ist. Dies erlaubt einen einfachen Wechsel des Kommunikationsmoduls sowie ein einfaches Anbringen des Kommunikationsmoduls ohne Werkzeug. Das Kommunikationsmodul kann beispielsweise Rastelemente aufweisen, mit denen das Kommunikationsmodul am Gehäuse des Elektronikgeräts verrastet und auf diese Weise am Gehäuse des Elektronikgeräts fixiert wird.

Das Kommunikationsmodul kann einen eigenen Steuerrechner aufweisen, der ein im Kommunikationsmodul gespeichertes Computerprogramm ausführt. Auf diese Weise kann insbesondere eine effiziente Umsetzung zwischen dem externen Kommunikationsprotokoll und dem internen Kommunikationsprotokoll erfolgen, insbesondere wenn dies einen bestimmten Rechenaufwand und/oder Speicherbedarf erfordert. Das Kommunikationsmodul kann auch ohne eigenen Steuerrechner ausgebildet sein, was z. B. dann vorteilhaft ist, wenn das externe Kommunikationsprotokoll identisch mit dem internen Kommunikationsprotokoll ist oder nur geringfügig davon abweicht. Beispielsweise kann das Kommunikationsmodul in solchen Fällen lediglich eine hardwaremäßige Anpassungsschaltung aufweisen, z. B. zur Anpassung von Spannungspegeln der Physical-Layer.

Gemäß einer vorteilhaften Ausgestaltung der Erfindung ist vorgesehen, dass das Elektronikgerät eine hardwaremäßige Erkennungsschaltung aufweist, durch die die Steuerelektronik erkennen kann, ob ein Kommunikationsmodul mit eigenem Steuerrechner oder ein Kommunikationsmodul ohne eigenen Steuerrechner mit dem Elektronikgerät verbunden ist. Dies hat den Vorteil, dass das Elektronikgerät mit geringem Aufwand selbsttätig feststellen kann, welche Art von Kommunikationsmodul mit dem Elektronikgerät verbunden ist. Dementsprechend kann das Elektronikgerät seine Kommunikationsfunktionen automatisch auf das jeweils verbundene Kommunikationsmodul anpassen. Bei Kommunikationsmodulen ohne eigenen Steuerrechner kann der Rechner des Elektronikgeräts bestimmte Steuerfunktionen des Kommunikationsmoduls übernehmen, wie z. B. die Ansteuerung eines Steuereingangs des Kommunikationsmoduls zur Einstellung der Datenübertragungsrichtung.

Gemäß einer vorteilhaften Ausgestaltung der Erfindung ist vorgesehen, dass das Elektronikgerät für einen Wechsel des Kommunikationsmoduls im laufenden Betrieb (Hot-Plug) eingerichtet ist. Hierdurch wird die Flexibilität der Anpassung des Elektronikgeräts an unterschiedliche Bedürfnisse weiter erhöht. Das Elektronikgerät kann dabei dazu eingerichtet sein, nach dem Wechsel des Kommunikationsmoduls automatisch veränderte Schnittstellenparameter seiner Kommunikationsschnittstelle zum Kommunikationsmodul anzupassen. Die Anpassung der Kommunikationsparameter kann auch vom neu angesteckten Kommunikationsmodul angefordert werden.

Beschrieben wird außerdem eine Kommunikationseinheit eines Elektronikgeräts der zuvor erläuterten Art. Hierbei ist die Kommunikationseinheit als wechselbares Kommunikationsmodul ausgebildet ist, wobei das Kommunikationsmodul eine Gateway-Funktionalität aufweist, durch die eine bidirektionale Konvertierung zwischen einem von dem externen Computergerät genutzten externen Kommunikationsprotokoll und/oder Physical-Layer und einem zwischen dem Kommunikationsmodul und dem Rechner genutzten internen Kommunikationsprotokoll und/oder Physical-Layer erfolgt, wobei das Kommunikationsmodul entweder genau ein externes Kommunikationsprotokoll oder mehrere externe Kommunikationsprotokolle unterstützt. Auch hierdurch können die zuvor erläuterten Vorteile realisiert werden.

Beschrieben wird außerdem ein Sortiment mit mehreren Kommunikationsmodulen der zuvor erläuterten Art, wobei die Kommunikationsmodule des Sortiments jeweils dasselbe interne Kommunikationsprotokoll und/oder Physical-Layer aufweisen, aber unterschiedliche externe Kommunikationsprotokolle und/oder Physical-Layer aufweisen. Durch ein solches Sortiment können Elektronikgeräte mit einer Wechselmöglichkeit des Kommunikationsmoduls bei Bedarf an unterschiedliche externe Kommunikationsprotokolle und/oder Physical-Layer angepasst werden.

Das Sortiment kann um ein Kommunikationsmodul ergänzt werden, das als externes Kommunikationsprotokoll und/oder Physical-Layer das gleiche Kommunikationsprotokoll und/oder Physical-Layer aufweist wie das interne Kommunikationsprotokoll und/oder Physical-Layer. Dieses Kommunikationsmodul kann beispielsweise ohne eigenen Steuerrechner ausgebildet sein.

Wird als externes Kommunikationsprotokoll beispielsweise das IO-Link-Protokoll eingesetzt, kann das Kommunikationsmodul zur Ausführung folgender Funktionen eingerichtet sein:
Startphase: Parametrierung und Initialisierung IO-Link Kommunikation mit Daten, die aus dem Elektronikgerät ausgelesen werden (Identifikationsblock).
Prozessdaten: zyklische Modbus-Anfragen, synchronisiert mit IO-Link Anfragen oder asynchron mit IO-Link Anfragen.
Parameterdaten: Übersetzung und Rückübersetzung von IO-Link zu Modbus, dafür Umwandlung von IO-Link Indizes in Modbus-Adressen durch konstanten Offset, Mapping von Modbus-Fehlermeldungen auf IO-Link Fehlermeldungen, Weiterleitung von Ereignissen an IO-Link Master.

### BlockParameterization - BP:

Kommunikationsmodul versetzt Elektronikgerät in BP-Zustand, wenn es einen IO-Link BP-Start-Befehl erhalten hat.

Elektronikgerät übernimmt geschriebene Parameterwerte nicht direkt in aktive Konfiguration, sondern speichert sie zwischen.

Geschriebene Parameterwerte werden aktiv, wenn BP-Stop-Befehl gesendet wird und keine der Schreibanfragen während der BP fehlerhaft war.

Ergebnis der BP wird an IO-Link-Master gesendet.

### Data-Storage- DS

Kommunikationsmodul liest auf Anfrage des IO-Link-Masters Indizes aus Elektronikgerät aus (fest definierte Adresse) und baut die DS_IndexList zusammen, die dem IO-Link-Master zur Verfügung gestellt wird.

Kommunikationsmodul versetzen Elektronikgerät in BP-Zustand (Elektronikgerät behandelt folgende Anfragen wie BlockParametrierung), wenn Parametersatz geschrieben wird.

Behandlung wie normale Leseanfragen, wenn Parametersatz gelesen wird. Bereitstellung CRC des Parametersatzes aus Elektronikgerät.

Das Elektronikgerät weist Anschlüsse zur Abgabe der elektrischen Energie für die Energieversorgung der elektrischen Komponenten (Verbraucher) auf. Diese Anschlüsse können auch als Stromversorgungs-Ausgangsanschlüsse des Elektronikgeräts bezeichnet werden. Erfindungsgemäß weist das Elektronikgerät als weiteren Anschluss wenigstens einen steuerbaren Digital- oder Analog-Ausgangsanschluss und/oder wenigstens einen Digital- oder Analog-Eingangsanschluss auf. Im Falle eines steuerbaren Digital- oder Analog-Ausgangsanschlusses ist dieser von dem externen Computergerät über die Kommunikationseinheit steuerbar. Im Falle eines Digital- oder Analog-Eingangsanschlusses ist ein Eingangswert von diesem Eingangsanschluss über die Kommunikationseinheit von dem externen Computergerät auslesbar. Dies hat den Vorteil, dass über das Elektronikgerät zusätzlich noch zumindest eine einfache Remote-I/O-Funktionalität bereitgestellt werden kann. Der Digital- oder Analog-Ausgangsanschluss ist dementsprechend ein Output einer solchen Remote-I/O-Einheit, der Digital- oder Analog-Eingangsanschluss ein Input einer solchen Remote-I/O-Einheit. Dementsprechend können mit dem Elektronikgerät zumindest einfache Steuerungs- und Überwachungsaufgaben durchgeführt werden, sodass in vielen Fällen kein zusätzliches I/O-Modul in der Anlage erforderlich ist. Hierbei können für die Realisierung des Digital- oder Analog-Eingangsanschlusses und/oder des Digital- oder Analog-Ausgangsanschlusses bereits vorhandene I/O-Anschlüsse des Elektronikgeräts genutzt werden, die beispielsweise für bestimmte Standardfunktionen wie die Anzeige des korrekten Spannungsniveaus ("DC-OK") ohnehin vorhanden sind. Dementsprechend wird der erforderliche Hardwareaufwand für das Elektronikgerät bei Bereitstellung der erwähnten Remote-I/O-Funktionalität nicht erhöht.

Durch diese Remote-I/O-Funktionalität kann das Elektronikgerät als digitale Außenstelle fungieren, die mittels der Datenkommunikation für die Zustands- oder Funktionsüberwachung genutzt wird. Diese Remote-I/O-Funktionalität kann durch eine reine Softwareerweiterung, d. h. durch entsprechenden Code des Computerprogramms, realisiert werden. Zusätzliche Hardware ist somit nicht erforderlich.

Ist der Digital- oder Analog-Eingangsanschluss als Digital-Eingangsanschluss ausgebildet, werden nur binäre Eingangswerte bereitgestellt (0 und 1). Ist der Digital- oder Analog-Eingangsanschluss als Analog-Eingangsanschluss ausgebildet, werden Eingangswerte mit einem bestimmten Wertebereich bereitgestellt, beispielsweise mit 8 Bit (0 bis 255) oder 12 Bit (0 bis 4095), je nach Auflösung eines verwendeten Analog-Digital-Wandlers.

Ist der Digital- oder Analog-Ausgangsanschluss als Digital-Ausgangsanschluss ausgebildet, sind nur binäre Ausgangswerte einstellbar (0 und 1). Ist der Digital- oder Analog-Ausgangsanschluss als Analog-Ausgangsanschluss ausgebildet, werden Ausgangswerte mit einem bestimmten Wertebereich bereitgestellt, beispielsweise mit 8 Bit (0 bis 255) oder 12 Bit (0 bis 4095), je nach Auflösung eines verwendeten Digital-Analog-Wandlers.

Gemäß einer vorteilhaften Ausgestaltung der Erfindung ist vorgesehen, dass das Elektronikgerät genau einen steuerbaren Digital- oder Analog-Ausgangsanschluss aufweist. Hierdurch wird der Aufwand für die Remote-I/O-Funktionalität minimiert, zumal ein einzelner steuerbarer Digital- oder Analog-Ausgangsanschluss bei einem solchen Elektronikgerät in der Regel ohnehin erforderlich ist.

Gemäß einer vorteilhaften Ausgestaltung der Erfindung ist vorgesehen, dass das Elektronikgerät genau einen Digital- oder Analog-Eingangsanschluss aufweist. Hierdurch wird der Aufwand für die Remote-I/O-Funktionalität minimiert, zumal ein einzelner steuerbarer Digital- oder Analog-Eingangsanschluss bei einem solchen Elektronikgerät in der Regel ohnehin erforderlich ist.

Gemäß einer vorteilhaften Ausgestaltung der Erfindung ist vorgesehen, dass das Elektronikgerät einen Parameterspeicher aufweist, in dem Parameter zur Definition der Funktionalität des Elektronikgeräts speicherbar sind, wobei durch zumindest einen Parameter die Funktionalität des Digital- oder Analog-Eingangsanschlusses einstellbar ist und/oder die Funktionalität des steuerbaren Digital- oder Analog-Ausgangsanschlusses einstellbar ist. Dies hat den Vorteil, dass die Funktionalität des Digital- oder Analog-Eingangsanschlusses bzw. des Digital- oder Analog-Ausgangsanschlusses vom Anwender wählbar und dementsprechend einstellbar ist. Hierdurch wird die Flexibilität in der Nutzung des Elektronikgeräts weiter erhöht. Die Funktionalität des Digital- oder Analog-Eingangsanschlusses kann beispielsweise zwischen zwei verschiedenen Funktionen oder einer höheren Anzahl von verschiedenen Funktionen umgestellt werden. Die Funktionalität des Digital- oder Analog-Ausgangsanschlusses kann beispielsweise zwischen zwei Funktionen oder einer höheren Anzahl von Funktionen umgestellt werden.

Gemäß einer vorteilhaften Ausgestaltung der Erfindung ist vorgesehen, dass die Funktionalität des Digital- oder Analog-Eingangsanschlusses mittels wenigstens eines Parameters zumindest auf eine fest vorgegebene Standard-Eingangsfunktion und/oder die Funktionalität des steuerbaren Digital- oder Analog-Ausgangsanschlusses mittels wenigstens eines Parameters zumindest auf eine fest vorgegebene Standard-Ausgangsfunktion einstellbar ist. Dies vereinfacht die Auswahl der Funktionalität des Digital- oder Analog-Eingangsanschlusses bzw. des Digital- oder Analog-Ausgangsanschlusses für den Anwender.

Gemäß einer vorteilhaften Ausgestaltung der Erfindung ist vorgesehen, dass die Standard-Ausgangsfunktion die Ausgabe eines Signals an dem steuerbaren Digital- oder Analog-Ausgangsanschluss ist, das anzeigt, ob die an den Anschlüssen zur Abgabe der elektrischen Energie abgegebene Spannung des Elektronikgeräts in einem zulässigen Bereich liegt. Dementsprechend kann der Digital- oder Analog-Ausgangsanschluss auf eine Standardfunktion als "DC-OK"-Anschluss eingestellt werden.

Gemäß einer vorteilhaften Ausgestaltung der Erfindung ist vorgesehen, dass die Standard-Eingangsfunktion ein fernsteuerbares Ein-/Ausschalten des Elektronikgeräts oder der an den Anschlüssen zur Abgabe der elektrischen Energie abgegebenen Energie über den Digital- oder Analog-Eingangsanschluss ist. Dementsprechend kann der Digital- oder Analog-Eingangsanschluss in der Standardfunktion als Fernsteueranschluss für das Elektronikgerät genutzt werden.

In einer vorteilhaften Ausgestaltung weist das Elektronikgerät wenigstens einen mittels des Computerprogramms softwaremäßig realisierten elektronischen Überstrom-Schutzschalter auf. Vorteilhafterweise kann das Elektronikgerät somit um eine zumindest im Wesentlichen in Software realisierte Überstrom-Schutzschalterfunktionalität erweitert werden. Es wird somit ein Elektronikgerät mit einer zumindest einkanaligen elektronischen Schutzschalterfunktionalität innerhalb eines Gerätes vereint. Dies hat den Vorteil, dass im Regelfall auf einen externen Überstrom-Schutzschalter (circuit breaker) verzichtet werden kann. Hierdurch kann der Anwender Kosten und Bauraum sparen. Zudem wird die Flexibilität für den Anwender erhöht. Zudem wird die externe Verdrahtung vereinfacht, weil kein zusätzlicher Verdrahtungsaufwand für einen externen Überstrom-Schutzschalter erforderlich ist.

Gemäß einer vorteilhaften Ausgestaltung der Erfindung ist vorgesehen, dass der elektronische Überstrom-Schutzschalter allein durch das Computerprogramm ohne ergänzende Hardware-Bauteile realisiert ist. Somit wird die im Elektronikgerät ohnehin verfügbare Hardware genutzt, um die Funktionalität des elektronischen Überstrom-Schutzschalters zu realisieren. So kann die Schutzschalter-Software nur die Hardware nutzen, die auch die Software zur Steuerung des Elektronikgerät oder speziell des Energieversorgungsgeräts an sich nutzt, um voll funktionsfähig sein.

Gemäß einer vorteilhaften Ausgestaltung der Erfindung ist vorgesehen, dass der elektronische Überstrom-Schutzschalter eine Funktion zum Abschalten des vom Elektronikgerät abgegebenen Ausgangsstroms und/oder eine Funktion zur Begrenzung des vom Elektronikgerät abgegebenen Ausgangsstroms auf einen vorbestimmten Stromwert umfasst. Das Abschalten kann dabei eine permanente Abschaltung des Ausgangsstroms oder eine temporäre (vorübergehende) Abschaltung des Ausgangsstroms umfassen. Gleiches gilt für die Begrenzung des Ausgangsstroms, diese kann wahlweise permanent oder temporär sein. Die Funktion des elektronischen Überstrom-Schutzschalters kann auch ein Umschalten zwischen der Abschaltung des Ausgangstroms und der Begrenzung des Ausgangsstroms umfassen.

Gemäß einer vorteilhaften Ausgestaltung der Erfindung ist vorgesehen, dass das Abschalten des vom Elektronikgerät abgegebenen Ausgangsstroms oder die Begrenzung des vom Elektronikgerät abgegebenen Ausgangsstroms durch primärseitige Steuerung des Elektronikgeräts erfolgt. Z.B. kann primärseitig direkt der Hauptübertrager, z.B. der Transformator, gesteuert werden. Dies erlaubt eine einfache Realisierung der elektronischen Überstrom-Schutzschalterfunktionalität. So kann die Energiezufuhr und damit die Abgabe des Ausgangstroms gestoppt oder auf ein geringeres Maß gesetzt werden, indem der eigentliche Hauptübertrager des Elektronikgeräts primärseitig nicht mehr aktiv angesteuert wird.

Für die Realisierung der elektronischen Überstrom-Schutzschalterfunktionalität weist das Elektronikgerät eine Strommessung im Ausgangszweig auf. Durch die Strommessung kann festgestellt werden, ob der Ausgangsstrom zu hoch ist und dementsprechend der elektronische Überstrom-Schutzschalter ansprechen muss, um das Abschalten oder die Begrenzung des Ausgangsstroms durchzuführen.

Gemäß einer vorteilhaften Ausgestaltung der Erfindung ist vorgesehen, dass der elektronische Überstrom-Schutzschalter eine Überwachung des vom Elektronikgerät abgegebenen Ausgangsstroms auf Überschreitung eines Grenzstromwerts aufweist, wobei bei Überschreiten des Grenzstromwerts ein Abschalten des Ausgangsstroms oder eine Begrenzung des Ausgangsstroms auf einen vorbestimmten Stromwert, z. B. den Grenzstromwert, erfolgt. Der abgegebene Ausgangsstrom kann dabei über die erwähnte Strommessung bestimmt werden. Durch den Rechner kann verglichen werden, ob der gemessene Ausgangsstrom den Grenzstromwert überschreitet. Dementsprechend kann der Rechner entsprechende Gegenmaßnahmen einleiten, wie z. B. das Abschalten des Ausgangsstroms oder die Begrenzung des Ausgangsstroms.

Gemäß einer vorteilhaften Ausgestaltung der Erfindung ist vorgesehen, dass das Abschalten des Ausgangsstroms oder die Begrenzung des Ausgangsstroms erst nach einer vorbestimmten Auslösezeit erfolgt, während der der Ausgangsstrom durchgehend oder zeitlich überwiegend den Grenzstromwert überschreitet. Dies hat den Vorteil, dass die elektronische Überstrom-Schutzschalterfunktionalität nicht zwangsläufig bei jeder geringfügigen kurzen Überschreitung des Grenzstromwerts anspricht, sondern erst nach der vorbestimmten Auslösezeit.

Gemäß einer vorteilhaften Ausgestaltung der Erfindung ist vorgesehen, dass das Elektronikgerät einen Parameterspeicher aufweist, in dem Parameter zur Definition der Funktionalität des Elektronikgeräts speicherbar sind, wobei der elektronische Überstrom-Schutzschalter durch einen oder mehrere in dem Parameterspeicher einstellbare Parameter nach Wunsch des Anwenders konfigurierbar ist. Dies hat den Vorteil, dass die Schutzschalter-Funktionalität an den Bedarf des Anwenders angepasst werden kann. Es können insbesondere als Parameter die Auslösezeit und/oder der Grenzstromwert einstellbar sein. Durch die Einstellmöglichkeit der Auslösezeit sind wahlweise sowohl "flinke" als auch "träge" Schutzschalter-Charakteristika einstellbar.

Gemäß einer vorteilhaften Ausgestaltung der Erfindung können die Parameter in dem Parameterspeicher des Elektronikgeräts über die Kommunikationseinheit mittels des externen Computergeräts eingestellt werden. Damit ist eine Einstellung der Schutzschalter-Funktionalität auch aus der Ferne möglich. Zudem ist eine einfache Möglichkeit der Änderung der Parameter gegeben.

Gemäß einer vorteilhaften Ausgestaltung der Erfindung kann das Ansprechen des Überstrom-Schutzschalters, z.B. die Auslösung der Begrenzung und/oder Abschaltung des abgegebenen Ausgangsstroms, über eine Leuchtrückmeldung und/oder über eine Kommunikationsschnittstelle signalisiert werden kann. Hierzu können vorteilhaft ohnehin vorhandene Leuchtsignalanzeigen, z.B. LEDs, genutzt werden, die im Normalbetrieb die Last des Elektronikgeräts anzeigen. Über verschiedene Blinkcodes (abseits des Normalbetriebs) können jedoch auch Sonderzustände signalisiert werden, wie z.B. die Schutzschalterfunktionalität. Als Kommunikationsschnittstelle kann die bereits erwähnte Kommunikationseinheit des Elektronikgeräts genutzt werden.

Das Elektronikgerät kann über eine Protokollierungsfunktion verfügen, in der die Aktivität der elektronischen Überstrom-Schutzschalterfunktionalität protokolliert wird. Beispielsweise kann protokolliert werden, wann und wie lange durch den elektronischen Überstrom-Schutzschalter das Abschalten des Ausgangsstroms und/oder eine Begrenzung des Ausgangsstroms durchgeführt wird. Die Protokolldatei kann von einem externen Computergerät über die Kommunikationseinheit des Elektronikgeräts ausgelesen werden. Hierdurch werden verbesserte Diagnosemöglichkeiten für den Anwender bereitgestellt.

Gemäß einer vorteilhaften Ausgestaltung der Erfindung ist vorgesehen, dass das Elektronikgerät ein Gehäuse aufweist, an dem Tragschienenbefestigungselemente angeordnet sind, durch die das Elektronikgerät an einer Tragschiene der elektrischen Installationstechnik befestigbar ist. Auf diese Weise kann das Elektronikgerät wie andere Komponenten einer industriellen Steuerungsanlage an der Tragschiene befestigt werden, beispielsweise neben anderen Geräten aufgereiht werden. Das Elektronikgerät kann z. B. an der Tragschiene aufgerastet werden.

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°). Soweit ein Rechner erwähnt ist, kann dieser dazu eingerichtet sein, ein Computerprogramm, z.B. im Sinne von Software, auszuführen. Der Rechner kann als handelsüblicher Computer ausgebildet sein, z.B. als PC, Laptop, Notebook, Tablet oder Smartphone, oder als Mikroprozessor, Mikrocontroller oder FPGA, oder als Kombination aus solchen Elementen. Soweit eine Regelung erwähnt ist, unterscheidet sich eine Regelung von einer Steuerung dadurch, dass eine Regelung eine Rückführung oder Rückkopplung gemessener oder interner Werte aufweist, mit der die erzeugten Ausgabewerte der Regelung wiederum im Sinne eines geschlossenen Regelkreises beeinflusst werden. Bei einer Steuerung erfolgt ein reines Steuern einer Größe ohne eine solche Rückführung oder Rückkopplung.

Die Erfindung wird nachfolgend anhand von Ausführungsbeispielen unter Verwendung von Zeichnungen näher erläutert.

Es zeigen
- Figur 1: ein Elektronikgerät in schematischer Darstellung und
- Figur 2: ein Kommunikationsmodul in schematischer Darstellung und
- Figur 3: eine Anordnung aus einem Elektronikgerät und einem Kommunikationsmodul in schematischer Darstellung.

Die in den Figuren verwendeten Bezugszeichen haben folgende Bedeutung:
1. Elektronikgerät
2. Gehäuse
3. Kommunikationseinheit
4. Digital- oder Analog-Ausgangsanschluss
5. Digital- oder Analog-Eingangsanschluss
6. Rechner
7. Datenbus
8. externes Computergerät
9. Energieversorgungs-Ausgangsanschlüsse
10. Eingangsanschlüsse
11. Programmspeicher
12. Parameterspeicher
13. primärseitige Komponenten
14. Transformator
15. sekundärseitige Komponenten
16. Steuerelektronik
30. Kommunikationsmodul
31. Steckverbindung
32. interne Hardware-Schnittstelle
33. Steuerrechner
34. Programmspeicher
35. Parameterspeicher
36. externe Hardware-Schnittstelle
37. Steckverbindung
I. Ausgangsstrom
U. Ausgangsspannung
R1. Widerstand
R2. Widerstand

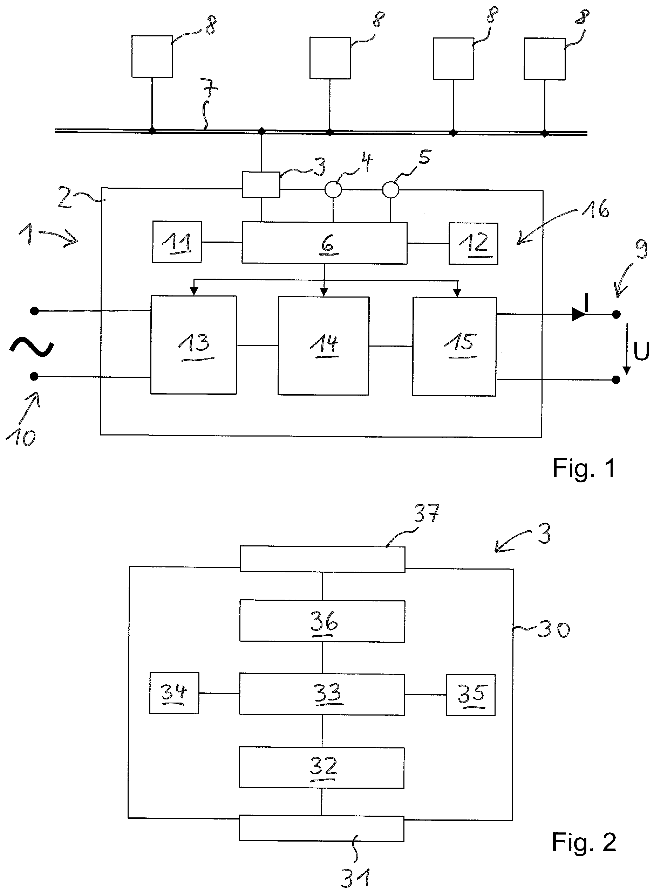

Die Figur 1 zeigt ein Elektronikgerät 1, dass ein Gehäuse 2 aufweist. Im Gehäuse 2 ist eine Steuerelektronik 16 des Elektronikgeräts 1 angeordnet. Im Gehäuse 2 befinden sich zudem Leistungselektronikbauteile 13, 14, 15. Das Elektronikgerät weist Eingangsanschlüsse 10 auf, mit denen das Elektronikgerät 1 an ein Stromversorgungsnetz, z. B. ein Wechselspannungsnetz, anzuschließen ist. Das Elektronikgerät 1 dient zur Umsetzung der von dem Stromversorgungsnetz über die Eingangsanschlüsse 10 aufgenommenen elektrischen Energie in ausgangsseitig abgegebene elektrische Energie, die an Energieversorgungs-Ausgangsanschlüssen 9 bereitgestellt wird. An den Energieversorgungs-Ausganganschlüssen 9 kann beispielsweise ein Ausgangsstrom I mit einer Ausgangsspannung U bereitgestellt werden, beispielsweise eine Gleichspannung.

Die Leistungselektronik-Komponenten 13, 14, 15 können primärseitige Komponenten 13 und sekundärseitige Komponenten 15 umfassen. Es kann zudem zwischen den primärseitigen Komponenten 13 und den sekundärseitigen Komponenten 15 ein Transformator 14 vorhanden sein.

Die Steuerelektronik 16 weist einen Rechner 6, einen Programmspeicher 11 und einen Parameterspeicher 12 auf. Der Rechner 6 ist mit dem Programmspeicher 11 und dem Parameterspeicher 12 verbunden. Im Programmspeicher 11 ist ein Computerprogramm gespeichert. Das Computerprogramm weist Software-Steuerfunktionen zur Steuerung von Stromversorgungs-Funktionen des Elektronikgeräts 1 auf, beispielsweise Regelfunktionen zur Konstanthaltung der Ausgangsspannung U und/oder des Ausgangsstroms I. Im Parameterspeicher 12 sind Parameter zur anwenderspezifischen Definition der Funktionalität des Elektronikgeräts gespeichert, z. B. um verschiedene Optionen oder Unterfunktionen in den Software-Steuerfunktionen auszuwählen. Der Rechner 6 führt das Computerprogramm aus und berücksichtigt dabei entsprechende Parameter aus dem Parameterspeicher 12. Hierbei steuert der Rechner 6 die Leistungselektronik-Komponenten 13, 14, 15 derart, dass an den Energieversorgungs-Ausgangsanschlüssen 9 ein gewünschter Ausgangsstrom I und/oder eine gewünschte Ausgangsspannung U bereitgestellt ist.

Über weitere im Computerprogramm vorhandene Software-Funktionen führt der Rechner eine elektronische Überstrom-Schutzschalterfunktionalität und/oder eine Remote I/O-Funktion aus, wie eingangs erläutert.

Bezüglich der Remote I/O-Funktion ist der Rechner 6 mit zusätzlichen Anschlüssen des Elektronikgeräts verbunden, die zumindest einen steuerbaren Digital- oder Analog-Ausgangsanschluss 4 und zumindest einen Digital- oder Analog-Eingangsanschluss 5 umfassen. Über den Digital- oder Analog-Eingangsanschluss 5 kann der Rechner 6 ein Eingangssignal, z. B. einen digitalen Wert oder einen analogen Wert, einlesen. An dem Ausgangsanschluss 4 kann der Rechner 6 ein digitales oder analoges Ausgangssignal abgeben. Die Anschlüsse 4, 5 müssen dabei nicht unmittelbar mit dem Rechner 6 verbunden sein, sondern können über geeignete Schnittstellenschaltungen davon entkoppelt sein.

Der Rechner 6 ist zudem mit einer Kommunikationseinheit 3 verbunden. Über die Kommunikationseinheit 3 kann der Rechner 6 und damit das Elektronikgerät 1 eine Datenkommunikation mit externen Computergeräten 8 durchführen. Im dargestellten Ausführungsbeispiel sind die Computergeräte 8 an einen Datenbus 7 angeschlossen. Das Elektronikgerät 1 ist über seine Kommunikationseinheit 3 ebenfalls mit dem Datenbus 7 verbunden. Auf diese Weise kann eine Datenkommunikation zwischen dem Elektronikgerät 1 und den externen Computergeräten 8 erfolgen.

Im Falle der Remote I/O-Funktionalität kann ein externes Computergerät 8 über die Kommunikationseinheit 3 den Digital- oder Analog-Ausgangsanschluss 4 steuern. Hierbei empfängt der Rechner 6 ein Steuerkommando von dem externen Computergerät 8 über die Kommunikationseinheit 3 und steuert den Digital- oder Analog-Ausgangsanschluss 4 entsprechend dem Steuerkommando an. Ein externes Computergerät 8 kann einen Eingangswert von dem Digital- oder Analog-Eingangsanschluss 5 über die Kommunikationseinheit 3 auslesen. Hierbei empfängt der Rechner 6 ein Auslesekommando von dem externen Computergerät 8 über die Kommunikationseinheit 3, liest den Eingangswert von dem Digital- oder Analog-Eingangsanschluss 5 ein und übermittelt den Eingangswert mittels einer Antwortbotschaft über die Kommunikationseinheit 3 an das externe Computergerät 8. Zudem kann die Funktionalität des Digital- oder Analog-Ausgangsanschlusses 4 und/oder des Digital- oder Analog-Eingangsanschlusses 5 über im Parameterspeicher 12 gespeicherte Parameter einstellbar sein.

Die in Figur 1 dargestellte Kommunikationseinheit 3 kann als wechselbares Kommunikationsmodul 30 ausgebildet sein, z. B. wie in Figur 2 dargestellt. Das Kommunikationsmodul 30 weist eine elektrische Steckverbindung 31 auf, mit der das Kommunikationsmodul 30 elektrisch mit dem Elektronikgerät 1 und insbesondere dessen Steuerelektronik 16 verbunden werden kann. Das Kommunikationsmodul 30 weist eine weitere elektrische Steckverbindung 37 auf, mit der das Kommunikationsmodul 30 mit einem externen Computergerät 8 direkt oder indirekt, z. B. über den Datenbus 7, verbunden werden kann.

In dem Kommunikationsmodul 30 kann ein eigener Steuerrechner 33 vorhanden sein. In diesem Fall ist es vorteilhaft, wenn das Kommunikationsmodul 30 einen eigenen Programmspeicher 34 und gegebenenfalls auch einen eigenen Parameterspeicher 35 aufweist, wobei diese Speicher jeweils mit dem Steuerrechner 33 verbunden sind, sodass der Steuerrechner 33 auf die Speicherinhalte zugreifen kann.

Das Kommunikationsmodul 30 weist eine Gateway-Funktionalität auf, durch die eine bidirektionale Konvertierung zwischen einem von dem externen Computergerät 8 genutzten externen Kommunikationsprotokoll und/oder Physical-Layer und einem zwischen dem Kommunikationsmodul 30 und dem Rechner 6 genutzten internen Kommunikationsprotokoll und/oder Physical-Layer erfolgt. Diese bidirektionale Konvertierung wird dabei im Wesentlichen von dem Steuerrechner 33 ausgeführt und gesteuert. Hierfür ist der Steuerrechner 33 einerseits mit der Steckverbindung 31 verbunden, z. B. über eine interne Hardware-Schnittstelle 32, und andererseits mit der weiteren Steckverbindung 37, z. B. über eine externe Hardware-Schnittstelle 36. Über die interne Hardware-Schnittstelle 32 kann eine hardwaremäßige Signalanpassung zwischen dem Steuerrechner 33 und dem verwendeten internen Physical-Layer erfolgen. Über die externe Hardware-Schnittstelle 36 kann eine hardwaremäßige Signalanpassung zwischen dem Steuerrechner 33 und dem genutzten externen Physical-Layer erfolgen.

Die anhand der Figur 2 erläuterte Struktur des Kommunikationsmoduls 30 ist insbesondere dann vorteilhaft, wenn sich das interne Kommunikationsprotokoll und das externe Kommunikationsprotokoll wesentlich unterscheiden und die Gateway-Funktionalität derart komplex ist, dass ein eigener Steuerrechner 33 erforderlich ist. Sind die Unterschiede zwischen dem internen und dem externen Kommunikationsprotokoll nicht so groß oder werden sogar gleiche Kommunikationsprotokolle verwendet, kann das Kommunikationsmodul 30 auch ohne eigenen Steuerrechner 33 ausgebildet sein. In diesem Fall kann auch der Programmspeicher 34 und der Parameterspeicher 35 entfallen. Gegebenenfalls kann auf die interne Hardware-Schnittstelle 32 verzichtet werden, oder diese kann kombiniert mit der externen Hardware-Schnittstelle 36 ausgeführt sein.

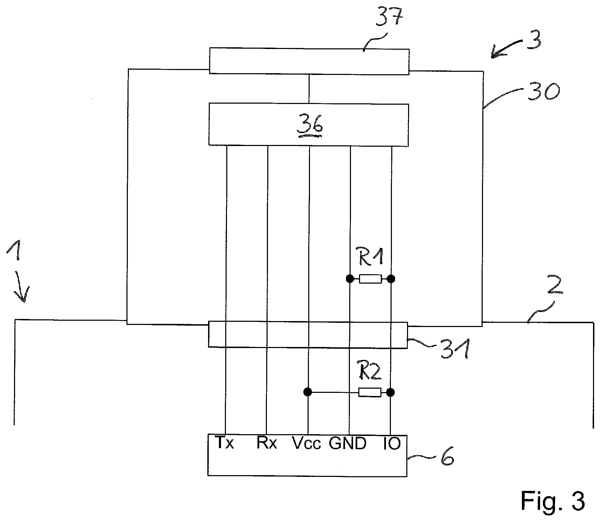

Die Figur 3 zeigt eine solche Ausführung eines Kommunikationsmoduls 30 in Verbindung mit einer Ausschnittdarstellung des Elektronikgeräts 1. Das Kommunikationsmodul 30 ist in diesem Fall ohne eigenen Steuerrechner ausgebildet. Im Wesentlichen weist das Kommunikationsmodul 30 dann nur die externe Hardware-Schnittstelle 36 auf. Je nach Ausführungsform kann es sein, dass bestimmte Ansteuer-Funktionen der externen Hardware-Schnittstelle 36 dennoch prozessorgesteuert erfolgen müssen, was mangels eines eigenen Steuerrechners im Kommunikationsmodul 30 dort nicht möglich ist. Diesbezüglich wird anhand der Figur 3 eine vorteilhafte Ausführungsform beschrieben, bei der diese prozessorgesteuerte Ansteuerung der externen Hardware-Schnittstelle 36 über den Rechner 6 des Elektronikgeräts 1 erfolgen kann.

Dargestellt ist eine Schnittstellenverbindung zwischen dem Rechner 6 und der externen Hardware-Schnittstelle 36, die z. B. in Form einer seriellen Schnittstelle mit einer Sendeleitung Tx und einer Empfangsleitung Rx ausgebildet sein kann. Es sind zudem elektrische Energieversorgungsleitungen Vcc (Betriebsspannung für die Hardware-Schnittstelle 36) und GND (Masseleitung) dargestellt. Vom Rechner 6 ist zudem ein I/O-Port dargestellt, der sowohl als Ausgangsanschluss als auch als Eingangsanschluss betrieben werden kann. Wird der I/O-Port als Ausgangsanschluss betrieben, so kann der Rechner 6 hierdurch einen Steueranschluss der externen Hardware-Schnittstelle 36 steuern, z. B. um die Datenübertragungsrichtung Senden/Empfangen einzustellen. Wird der I/O-Port als Eingangsanschluss betrieben, so kann hierüber ein digitales oder analoges Signal eingelesen werden.

Die Figur 3 zeigt dabei eine hardwaremäßige Erkennungsschaltung, durch die die Steuerelektronik 16 bzw. der Rechner 6 erkennen kann, ob ein Kommunikationsmodul 30 mit eigenem Steuerrechner 33 oder ein Kommunikationsmodul 30 ohne eigenen Steuerrechner 33 mit dem Elektronikgerät 1 verbunden ist. Hierdurch kann der Rechner 6 automatisch feststellen, ob er die Steuerfunktionen über die Ausgangssignale des I/O-Ports durchführen muss oder nicht.

Die hardwaremäßige Erkennungsschaltung weist in diesem Fall einen im Elektronikgerät 1 verbauten Widerstand R2 auf, der eine Verbindung zwischen Vcc und dem I/O-Port herstellt (Pull-Up Widerstand). Im Kommunikationsmodul 30 ist ein weiterer Widerstand R1 vorhanden, der eine Verbindung zwischen GND und dem I/O-Port herstellt (Pull-Down-Widerstand). Der Rechner 6 kann anhand eines über den I/O-Port eingelesenen Spannungspegels, der sich aufgrund des Widerstandsverhältnisses R1/R2 einstellt, erkennen, dass ein Kommunikationsmodul 30 ohne eigenen Steuerrechner angeschlossen ist. Ein entsprechendes Kommunikationsmodul 30 mit eigenem Steuerrechner würde ohne einen solchen Widerstand R1 ausgebildet sein, sodass sich dann ein anderer Spannungspegel am I/O-Port einstellt, was der Rechner 6 ebenfalls erkennen kann.

## Patentansprüche

1. Elektrisches Energieversorgungsgerät (1) für die elektrische Energieversorgung elektrischer Komponenten aus einer Energiequelle, wobei das Energieversorgungsgerät (1) wenigstens eine Kommunikationseinheit (3) aufweist, durch die das Energieversorgungsgerät (1) zur Datenkommunikation mit einem externen Computergerät (8) eingerichtet ist, wobei das Energieversorgungsgerät (1) Anschlüsse (9) zur Abgabe der elektrischen Energie für die Energieversorgung der elektrischen Komponenten aufweist, wobei das Energieversorgungsgerät (1) eine Remote-I/O-Einheit hat, durch die eine Remote-I/O-Funktionalität bereitgestellt ist, wodurch das Energieversorgungsgerät (1) als digitale Außenstelle fungieren kann, die mittels der Datenkommunikation für die Zustands- oder Funktionsüberwachung genutzt werden kann, wobei das Energieversorgungsgerät (1) als weiteren Anschluss wenigstens einen steuerbaren Digital- oder Analog-Ausgangsanschluss (4), der ein Output einer solchen Remote-I/O-Einheit ist, und/oder wenigstens einen Digital- oder Analog-Eingangsanschluss (5), der ein Input einer solchen Remote-I/O-Einheit ist, aufweist, wobei im Falle eines steuerbaren Digital- oder Analog-Ausgangsanschlusses (4) dieser von dem externen Computergerät (8) über die Kommunikationseinheit (3) steuerbar ist und im Falle eines Digital- oder Analog-Eingangsanschlusses (5) ein Eingangswert von diesem Eingangsanschluss über die Kommunikationseinheit (3) von dem externen Computergerät (8) auslesbar ist.

2. Energieversorgungsgerät nach Anspruch 1, **dadurch gekennzeichnet, dass** das Energieversorgungsgerät (1) genau einen steuerbaren Digital- oder Analog-Ausgangsanschluss (4) aufweist.

3. Energieversorgungsgerät nach einem der vorhergehenden Ansprüche, **dadurch gekennzeichnet, dass** das Energieversorgungsgerät (1) genau einen Digital- oder Analog-Eingangsanschluss (5) aufweist.

4. Energieversorgungsgerät nach einem der vorhergehenden Ansprüche, **dadurch gekennzeichnet, dass** das Energieversorgungsgerät (1) einen Parameterspeicher (12) aufweist, in dem Parameter zur Definition der Funktionalität des Energieversorgungsgeräts (1) speicherbar sind, wobei durch zumindest einen Parameter die Funktionalität des Digital- oder Analog-Eingangsanschlusses (5) einstellbar ist und/oder die Funktionalität des steuerbaren Digital- oder Analog-Ausgangsanschlusses (4) einstellbar ist.

5. Energieversorgungsgerät nach Anspruch 4, **dadurch gekennzeichnet, dass** die Funktionalität des Digital- oder Analog-Eingangsanschlusses (5) mittels wenigstens eines Parameters zumindest auf eine fest vorgegebene Standard-Eingangsfunktion und/oder die Funktionalität des steuerbaren Digital- oder Analog-Ausgangsanschlusses (4) mittels wenigstens eines Parameters zumindest auf eine fest vorgegebene Standard-Ausgangsfunktion einstellbar ist.

6. Energieversorgungsgerät nach Anspruch 5, **dadurch gekennzeichnet, dass** die Standard-Ausgangsfunktion die Ausgabe eines Signals an dem steuerbaren Digital- oder Analog-Ausgangsanschluss (4) ist, das anzeigt, ob die an den Anschlüssen (9) zur Abgabe der elektrischen Energie abgegebene Spannung (U) des Energieversorgungsgeräts (1) in einem zulässigen Bereich liegt.

7. Energieversorgungsgerät nach einem der vorhergehenden Ansprüche, **dadurch gekennzeichnet, dass** die Standard-Eingangsfunktion ein fernsteuerbares Ein-/Ausschalten des Energieversorgungsgeräts (1) oder der an den Anschlüssen (9) zur Abgabe der elektrischen Energie abgegebenen Energie über den Digital- oder Analog-Eingangsanschluss (5) ist.

8. Energieversorgungsgerät nach einem der vorhergehenden Ansprüche, **dadurch gekennzeichnet, dass** die Kommunikationseinheit (3) als wechselbares Kommunikationsmodul (30) ausgebildet ist, das an das Energieversorgungsgerät (1) mittels einer elektrischen Steckverbindung (31) ansteckbar ist.

9. Energieversorgungsgerät nach einem der vorhergehenden Ansprüche, **dadurch gekennzeichnet, dass** das elektrische Energieversorgungsgerät als Netzgerät, z.B. als Netzgerät einer industriellen Steuerung, insbesondere einer speicherprogrammierbaren Steuerungsanlage, als Schaltnetzgerät und/oder als unterbrechungsfreie Stromversorgung (USV) ausgebildet ist.

## Claims

1. Electrical power supply device (1) for the electrical power supply of electrical components from a power source, the power supply device (1) having at least one communication unit (3), by means of which the power supply device (1) is set up for data communication with an external computer device (8), wherein the power supply device (1) has terminals (9) for outputting the electrical energy for the power supply of the electrical components, wherein the power supply device (1) has a remote I/O unit through which a remote I/O functionality is provided, whereby the power supply device (1) can function as a digital remote station, which can be used for status or function monitoring by means of data communication, the energy supply device (1) having as a further connection at least one controllable digital or analog output connection (4), which is an output of such a remote I/O unit, and/or at least one digital or analog input connection (5), which is an input of such a remote I/O unit, wherein, in the case of a controllable digital or analog output connection (4), this can be controlled by the external computer device (8) via the communication unit (3) and, in the case of a digital or analog input connection (5), an input value from this input connection can be read out by the external computer device (8) via the communication unit (3).

2. Energy supply device according to claim 1, **characterized in that** the energy supply device (1) has exactly one controllable digital or analog output connection (4).

3. Energy supply device according to one of the preceding claims, **characterized in that** the energy supply device (1) has exactly one digital or analog input connection (5).

4. Energy supply device according to one of the preceding claims, **characterized in that** the energy supply device (1) has a parameter memory (12) in which parameters for defining the functionality of the energy supply device (1) can be stored, it being possible to set the functionality of the digital or analog input connection (5) and/or to set the functionality of the controllable digital or analog output connection (4) by means of at least one parameter.

5. Energy supply device according to claim 4, **characterized in that** the functionality of the digital or analog input connection (5) can be set by means of at least one parameter to at least one fixedly predetermined standard input function and/or the functionality of the controllable digital or analog output connection (4) can be set by means of at least one parameter to at least one fixedly predetermined standard output function.

6. Energy supply device according to claim 5, **characterized in that** the standard output function is the output of a signal at the controllable digital or analogue output connection (4) which indicates whether the voltage (U) of the energy supply device (1) output at the terminals (9) for outputting the electrical energy is within a permissible range.

7. Energy supply device according to one of the preceding claims, **characterized in that** the standard input function is a remotely controllable switching on/off of the energy supply device (1) or of the energy output at the terminals (9) for outputting the electrical energy via the digital or analog input connection (5).

8. Energy supply device according to one of the preceding claims, **characterized in that** the communication unit (3) is designed as an exchangeable communication module (30) which can be plugged into the energy supply device (1) by means of an electrical plug connection (31).

9. Energy supply device according to one of the preceding claims, **characterized in that** the electrical power supply device is designed as a power supply unit, e.g. as a power supply unit of an industrial control system, in particular a programmable logic controller, as a switched-mode power supply unit and/or as an unin-terruptible power supply (UPS).

## Revendications

1. Dispositif électrique d'alimentation en énergie (1) pour l'alimentation en énergie électrique de composants électriques à partir d'une source d'énergie,
dans lequel
le dispositif d'alimentation en énergie (1) comprend au moins une unité de communication (3) par laquelle le dispositif d'alimentation en énergie (1) est adapté à la communication de données avec un ordinateur externe (8),
le dispositif d'alimentation en énergie (1) comprend des bornes (9) de fourniture de l'énergie électrique nécessaire à l'alimentation en énergie des composants électriques,
le dispositif d'alimentation en énergie (1) comprend une unité d'E/S distante qui assure une fonctionnalité d'E/S distante, permettant ainsi au dispositif d'alimentation en énergie (1) de faire office de station externe numérique susceptible d'être utilisée pour la surveillance de l'état ou du fonctionnement au moyen de la communication de données,
le dispositif d'alimentation en énergie (1) comprend comme borne supplémentaire au moins une borne de sortie numérique ou analogique (4) à commander, qui est une sortie d'une telle unité d'E/S distante, et/ou au moins une borne d'entrée numérique ou analogique (5) qui est une entrée d'une telle unité d'E/S distante,
dans le cas d'une borne de sortie numérique ou analogique (4) à commander, celle-ci peut être commandée par l'ordinateur externe (8) via l'unité de communication (3), et dans le cas d'une borne d'entrée numérique ou analogique (5), une valeur d'entrée de cette borne d'entrée peut être lue par l'ordinateur externe (8) via l'unité de communication (3).

2. Dispositif d'alimentation en énergie selon la revendication 1,
**caractérisé en ce que** le dispositif d'alimentation en énergie (1) possède exactement une borne de sortie numérique ou analogique (4) à commander.

3. Dispositif d'alimentation en énergie selon l'une des revendications précédentes,
**caractérisé en ce que** le dispositif d'alimentation en énergie (1) possède exactement une borne d'entrée numérique ou analogique (5).

4. Dispositif d'alimentation en énergie selon l'une des revendications précédentes,
**caractérisé en ce que** le dispositif d'alimentation en énergie (1) possède une mémoire de paramètres (12) permettant de stocker des paramètres de définition de la fonctionnalité du dispositif d'alimentation en énergie (1), sachant qu'au moins un paramètre permet de régler la fonctionnalité de la borne d'entrée numérique ou analogique (5) et/ou de régler la fonctionnalité de la borne de sortie numérique ou analogique (4) à commander.

5. Dispositif d'alimentation en énergie selon la revendication 4,
**caractérisé en ce que** la fonctionnalité de la borne d'entrée numérique ou analogique (5) peut être réglée par au moins un paramètre sur au moins une fonction d'entrée standard fixe, et/ou la fonctionnalité de la borne de sortie numérique ou analogique (4) à commander peut être réglée par au moins un paramètre sur au moins une fonction de sortie standard fixe.

6. Dispositif d'alimentation en énergie selon la revendication 5,
**caractérisé en ce que** la fonction de sortie standard est la sortie d'un signal sur la borne de sortie numérique ou analogique (4) à commander, lequel indique si la tension (U) du dispositif d'alimentation en énergie (1), fournie aux bornes (9) de fourniture d'énergie électrique, se situe dans une plage admissible.

7. Dispositif d'alimentation en énergie selon l'une des revendications précédentes,
**caractérisé en ce que** la fonction d'entrée standard est une activation/désactivation télécommandable du dispositif d'alimentation en énergie (1) ou de l'énergie fournie aux bornes (9) de fourniture d'énergie électrique via la borne d'entrée numérique ou analogique (5).

8. Dispositif d'alimentation en énergie selon l'une des revendications précédentes,
**caractérisé en ce que** l'unité de communication (3) est conçue comme un module de communication interchangeable (30) qui peut être branché au dispositif d'alimentation en énergie (1) au moyen d'une connexion électrique par enfichage (31).

9. Dispositif d'alimentation en énergie selon l'une des revendications précédentes,
**caractérisé en ce que** le dispositif électrique d'alimentation en énergie est conçu comme un bloc d'alimentation, par exemple comme un bloc d'alimentation pour un système de contrôle industriel, en particulier pour un automate programmable industriel, comme un bloc d'alimentation à découpage et/ou comme un système d'alimentation sans interruption (ASI).
